# EUROPEAN PATENT SPECIFICATION

(11) **EP 3 380 849 B1**
(45) Date of publication and mention of the grant of the patent: **08.01.2020**
(21) Application number: 16801739.0
(22) Date of filing: 18.11.2016
(51) Int. Cl.: G01P 15/093, G01P 15/08, B81B 5/00

(54) **FIBRE OPTIC ACCELERATION SENSOR**
FASEROPTISCHER BESCHLEUNIGUNGSSENSOR
CAPTEUR D'ACCÉLÉRATION À FIBRE OPTIQUE

(30) Priority: 27.11.2015 CH 17352015
(43) Date of publication of application: 03.10.2018
(73) Proprietor: MC-Monitoring S.A., 1762 Givisiez (CH)
(72) Inventor: AEBI, Laurent, 1691 Villarimboud (CH); TORMEN, Maurizio, 2013 Colombier (CH); TIMOTIJEVIC, Branislav, 1006 Lausanne (CH); PÉTREMAND, Yves, 1400 Yverdon-les-Bains (CH); BAYAT, Dara, 2000 Neuchâtel (CH); LÜTZELSCHWAB, Markus, 6243 Egolzwil (CH)
(74) Representative: BOVARD AG
(86) International application number: PCT/EP2016/078128
(87) International publication number: WO 2017/089235

(56) References cited:
- EP-A2- 1 083 429
- US-A- 4 595 830
- US-A- 5 886 265
- US-A1- 2006 192 974

## Description

### Technical domain of the invention

The present invention relates to fibre optic acceleration sensor and, more particularly, to a fibre optic micromechanical sensor of a microelectromechanical system for sensoring and monitoring end-winding vibrations as well as measuring parameters such as acceleration, force, or displacement.

### Background of the invention

Many types of sensors for use in heavy machines or large structures, always faces with high electromagnetic fields, high radiation levels, high temperatures, and other hostile factors. Such sensors also typically have to be small enough so that they can easily be integrated in as many different machines or structures as possible. Sensors which are able to operate in these conditions are usually based on optical methods.

Fibre optic acceleration sensors have been widely used in different applications such as for monitoring hydro generators, turbo generators, industrial machines and gearless windmill. End-winding vibration is generated due to strong electromagnetic forces at twice the synchronous frequency. Deterioration is accelerated when the self-resonance frequency of the stator bar is similar to the double synchronization frequency. A number of problems can be caused by constant end-winding vibrations such as weakening of the structures, weakening of the insulation, cracks, failure of the cooling system, cracking of the conductor and potentially short-circuit.

Conventional methods are often used in monitoring the end-winding vibrations, such as visual inspection during machine overhaul. However, failures are still possible between two overhauls and if it happens, the failure can induce long machine downtime as long as to 6 months. Apart from that, method such as end-winding online monitoring can also be used. Online measurement takes into consideration the temperature effect on the stator bar dominant self-resonance frequency.

Fibre optic acceleration sensor (FAS) is a preferred choice for detecting end-winding vibrations as well as measuring parameters such as acceleration, force, or displacement, as numeral advantages can be achieved through the use of FAS to monitor or detect end-winding vibrations which occur in hazardous or explosive environments. Furthermore, FAS is also immune against electrical magnetic fields and is highly insulated between sensor head and feed through (more than 65 kVrms demonstrated). Moreover, there is no electrical coupling between sensor-head and cubicle, therefore FAS poses no danger to life.

However, there exists a need in the market for increasing technical requirements for the FAS-sensors. For instance, an increased frequency range is required. In fact, common FAS has normally a frequency range from 10 Hz up to 400 Hz and resonance frequency around 600 Hz. An increased frequency range to around 1000 Hz and a higher resonance frequency to around 1500 Hz are therefore envisaged.

Furthermore, conventional FAS typically has a continuous temperature range of -20°C to 100°C. However, higher performance of a continuous temperature range of at least -20°C to 130, or preferably to at least about 155°C is also envisaged and sensors with higher stability of the sensitivity above 10 years are required.

EP 1 083 429 discloses a micromechanical sensor comprising a movable mass and a shutter extending from a free end of the mass. The shutter is arranged between an end of an input optical fibre for emitting light and an end of an output optical fibre for receiving an amount of the emitted light.

US 2006/0192974 discloses an optical interferometric apparatus for measuring acceleration, pressure and pressure of fluids. The optical interferometric apparatus comprises a movable mass and a stationary mass. A light source emits a beam which is converted into two beam portions after impinging onto the movable and stationary masses. Interference between the beam portions are used to measure acceleration or pressure.

US 5 886 265 discloses an optical vibration sensor including a built-in blade provided with a reflecting surface for reflecting light. One emitter optical fibre is provided for directing light onto the reflecting surface. One receiver optical fibre for receiving the reflected light is arranged parallel to the emitter optical fibre.

US 4 595 830 discloses multimode optical fibre accelerometers having one input optical fibre and two output optical fibres in contact with the input optical fibre. The light emanating from the input optical fibre is reflected on a mirror carried by a proof mass. A lens is arranged between the proof mass and the optical fibres.

### Disclosure of the invention

The present invention aims to overcome the above and other disadvantages with prior art fibre optic acceleration sensors. In particular, it is an object of the invention to provide an improved fibre optic acceleration sensors which have higher performance as illustrated above compared to the prior art.

The present invention also aims to provide a fibre optic acceleration sensor in which the size of the sensor is reduced compared to the conventional FAS and preferably, the sensitivity of the sensor is not reduced but rather increased.

Additional advantages of the present invention also include a better frequency response, higher resonance frequency and increased temperature response and wider continuous temperature range. which perform better than the prior art mentioned above such that it can be used to fulfill the ever-increasing demand for a more superior FAS sensor.

The present invention may also aim to increase the product lifespan to more than 10 years compared to the prior art fibre optic acceleration sensors which have typically lifespan up to 10 years.

The invention described in this application seeks to overcome some of the above and other difficulties inherent in the prior art. The inventors of the present invention have surprisingly found out that the above-formulated need can be met by providing the next generation fibre optic acceleration sensor or fibre optic micromechanical sensor of the present invention described herein.

In a first aspect, the present invention therefore relates to a fibre optic acceleration sensor according to claim 1.

A second aspect of the invention includes a microelectromechanical system (MEMS) comprising the fibre optic acceleration sensor according to the first aspect.

According to the invention, the optical portion of the fibre optic acceleration sensor comprises one input optical fibre and two output optical fibres. This configuration allows the temperature effect on the sensitivity to be diminished and the signal amplitude maximized. The input optical fibre and/or output optical fibre are preferably bendable optical fibres to allow a smaller size configuration to be built.

Furthermore, the input optical fibre and the two output optical fibre form two acute angles (α) at the reflecting tip from the longitudinal axis of the input optical fibre. This configuration, compared to a 90° conventional configuration, allows for a more compact design to be realised. The acute angle (α) at the reflecting tip can in particular be about 45° or 70°. Therefore, the overall size of the fibre optic acceleration sensor can be reduced compared to the prior art.

According to the present invention, the input optical fibre is placed in between the two output optical fibres, configured to form two acute angles at the reflecting tip from each side of the longitudinal axis of the input optical fibre. Thus higher sensitivity of the microelectromechanical system can be realised.

Also, the distance between an end face of the output optical fibre and the reflecting tip can preferably be configured to be less than the distance between and end face of the input optical fibres and the reflecting tip. This configuration can further reduce the size of the sensor and the system of the present invention.

Furthermore, the reflecting tip can preferably be provided with a reflecting coating. Also, the reflecting tip in some instances can be a micro-mirror. The micro-mirror can efficiently reflect lights from the input optical fibre into the output optical fibre.

Furthermore, the mechanical portion can preferably have at least two anchor points. This allows the said mechanical portion movable in an independent manner. Moreover, the seismic mass can be provided with a symmetric design or an asymmetric design. Both designs can achieve comparably good results. However, the asymmetric design is preferred as it provides more advantages such as higher sensitivity than the symmetric design.

The microelectromechanical system can also preferably be provided with anchors and grooves for the input and output optical fibres to be inserted therein. Furthermore, the microelectromechanical system can be provided with glue reservoirs.

### Brief description of the drawings

Other features and advantages of the invention will become apparent from the following description of non-limiting exemplary embodiments, with reference to the appended drawings, in which:
Figure 1 is a schematic view of the overall concept of the present invention.
Figure 2 is a schematic view showing the concept of the microfabricated sensitive element which comprises a mechanical portion and an optical portion.
Figure 3a-3c show the working principle of the sensitive element (fibre optic acceleration sensor) according to the present invention in a schematic way.
Figure 3d shows an enlarged image of the optical portion of the fibre optic acceleration sensor according to the present invention.
Figure 4 shows an enlarged perspective view of the Figure 3d.
Figure 5 shows an example of a microelectromechanical system according to the present invention with fibre routing and glue reservoirs.

### Detailed description of the invention

The invention and its advantages are explained in the following detailed description with reference to the attached figures, which illustrate an example of the invention in schematic form.

Note that the drawings are intended merely as an exemplary illustration of how the principles underlying the invention can be implemented. The drawings should not be construed as limiting the scope of the invention, which is set out in the accompanying claims.

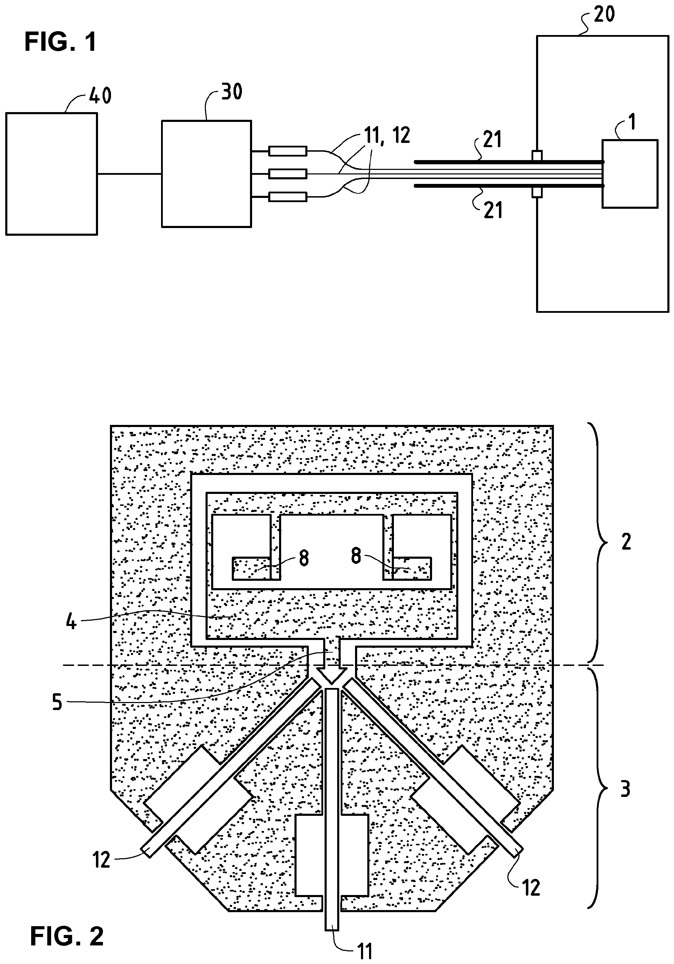

Figure 1 shows a general concept of a fibre optic acceleration sensor (or of a fibre optic micromechanical sensor) 1 for sensoring and monitoring end-winding vibration and also detecting acceleration, force and displacement. Said fibre optic acceleration sensor 1 is generally placed in a generator 20 to monitor the end-winding vibrations. Inside the generator a hydrogen rich environment can typically be found. The feed-through between inside and outside the generator 20 is realized with optical connectors 21 to allow for example optical fibers 11, 12 to pass through. The light source and photodiodes are mounted on the read-out module 30. The read-out module 30 is connected to a data processing electronics 40.

Figure 2 illustrates the general concept of the present invention. The fibre optic acceleration sensor (sensitive element) 1 comprises a mechanical portion 2 and an optical portion 3, wherein the mechanical portion comprises a seismic mass 4 (also called proof mass) and a reflecting tip 5 extending therefrom. The mechanical portion has at least two anchor points 8. The optical portion 3 comprises three optical fibres, namely one input optical fibre (emitter fibre) 11 and two output optical fibres (receiving fibres)) 12. The reflecting tip 5 extends towards the longitudinal axis of the input optical fibre 11.

According to the configuration, light from the input optical fibre 11 reaches at the reflecting tip and is then completely reflected into at least one output optical fibre 12. In the present example, the input optical fibre 11 is flanked by the output optical fibres 12 (receiving fibres) on both sides. With a dual receiving signal (of the output optical fibres) the temperature effect may be diminished and the signal amplitude maximized. These both characteristics increase the sensor overall performance.

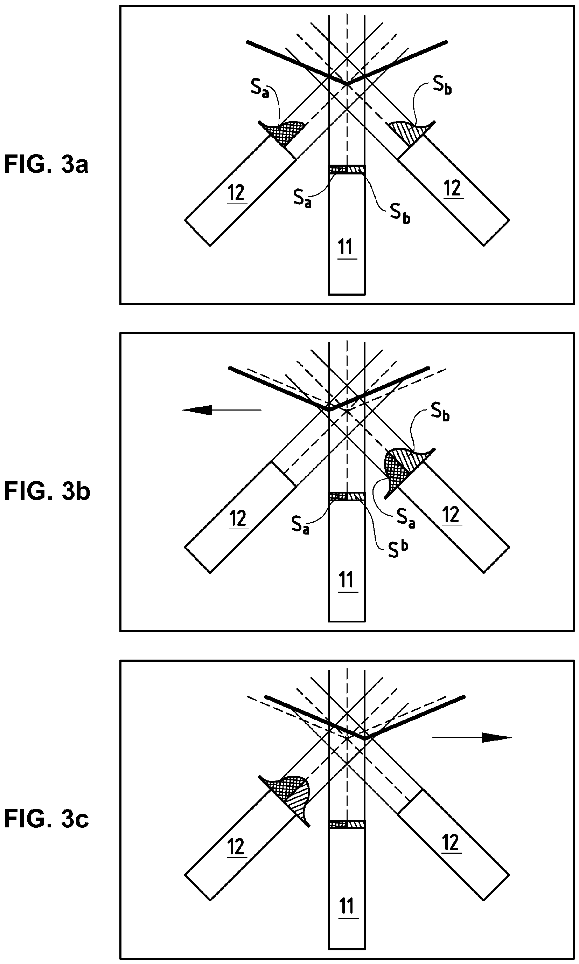

Figure 3a-c illustrate a working principle of the present invention. When the seismic mass 4 with a reflecting tip 5 extending therefrom is subjected to end-winding vibrations or such as acceleration, force or displacement, the reflected light intensity is amplitude modulated in both output optical fibres 12. The variation of the light intensity is proportional to the acceleration. The summation of both light intensities is constant.

Figure 3a illustrates when the system is at rest. During rest or when no vibration is detected, light intensity from the input optical fibre 11 (Sₐ, S_{b}) is split almost equally into two output optical fibres 12 (Sₐ in one output optical fibre 12; S_{b} in another output optical fibre 12). When the system (mechanical portion) is subjected to a vibration such as a left acceleration (shown by left-pointed arrow), whereby seismic mass 4 and its reflecting tip 5 extending therefrom moves towards the left, the light intensity is reflected into the right output optical fibre 12, as illustrated in Figure 3b (Sₐ and S_{b} in one output optical fibre). Contrary, when the system (mechanical portion) is subjected to a right acceleration (right-pointed arrow), whereby seismic mass 4 and its reflecting tip 5 extending therefrom moves towards the right, the light intensity is reflected into the left output optical fibre 12 (Sₐ and S_{b} in one output optical fibre), as illustrated in Figure 3c.

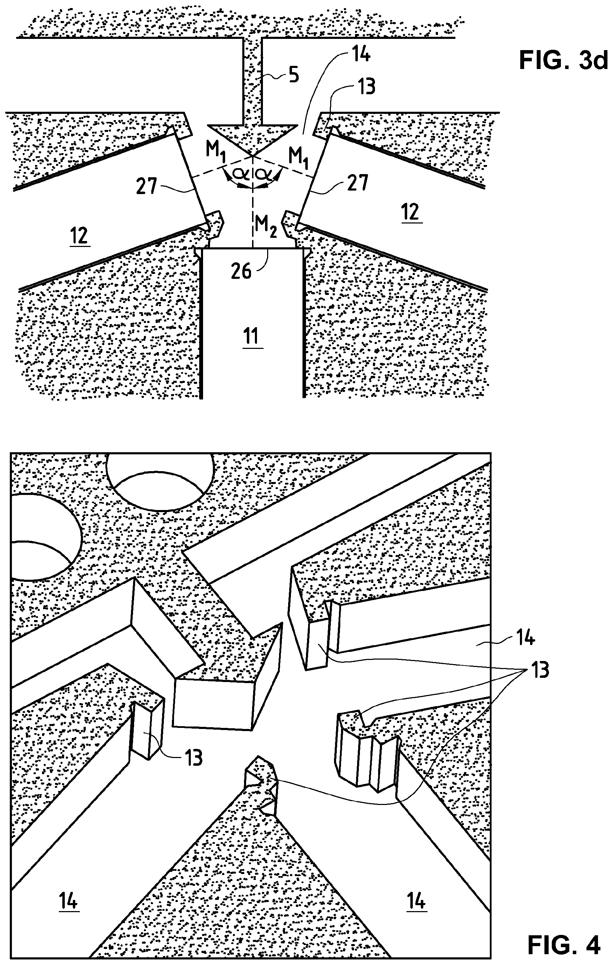

As shown in Fig. 3d, the input- and output optical fibres are accommodated in grooves 14 and preferably further with an assistance of anchors 13. To optimize the reflecting light intensity and to realize for a more compact FAS, both output optical fibres 12 can preferably be aligned with an acute angle (α) at the reflecting tip 5 from the longitudinal axis of the input optical fibre 11, as shown in Figure 3d.

Design of about 70 ° configuration is preferred. Thanks to the bendable optical fibres 11, 12, the configuration of 70° design enables for a reduced size of the fibre optic acceleration sensor to be realised compared to the conventional 90° configuration fibre optic acceleration sensor. However, a design of about 45° is also possible. With an angle of about 45°, the sensor width may be further reduced compared to the 70° angle configuration. However the reflected light intensity is then also reduced by at least a factor two. Reflecting coating may be applied on the reflecting tip. The reflecting tip can be a micro-mirror.

Furthermore, according to the present invention, the distance (M₁) between an end face 27 of the output optical fibre 12 and the reflecting tip 5 is preferably less than the distance (M₂) between an end face 26 of the input optical fibres 11 and the reflecting tip 5 (Fig. 3d). This configuration allows for the output optical fibres 12 to be placed as near as possible to the reflecting tip 5 while the input optical fibre 11 is placed further away from the reflecting tip 5. A smaller size fibre optic acceleration sensor can thus be realised.

Figure 4 shows an enlarged image of the optical portion 3, where anchors 13 and grooves 14 are configured to accommodate the input and output optical fibres 11, 12.

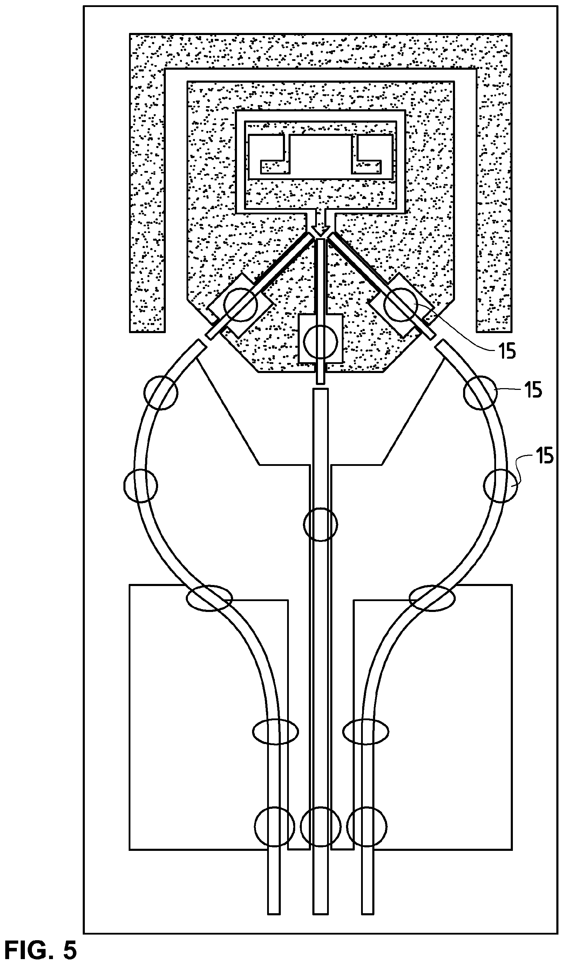

Figure 5 shows part of a microelectromechanical system with fibre routing. The circled points represents glue reservoirs 15 points to fix the fibres. Moreover, the present invention is superior compared to the common fibre optical sensor (data not shown). A microelectromechanical system with a size approximately of 8 mm x 8 mm can be realized with this configuration.

In some instances, during rest or when no vibration is detected, light intensity from the input optical fibre 11 (Sₐ, S_{b}) does not always needed to be equally split into two output optical fibres 12 (Sₐ in one output optical fibre 12; S_{b} in another output optical fibre 12). The light from the input optical fibre can be split unequally, for example in the percentage of 60-40, 70-30, 80-20 or 90-10, into the two output optical fibres. Of course further configurations needed to be adjusted and calibrated subsequently in order to sense and detect the end winding vibrations as well as to measure parameters such as acceleration, force and displacement.By "about" in relation to a given numerical value for angle, amount, temperature or a period of time, it is meant to include numerical values within 10% of the specified value.

By "comprising" it is meant including, but not limited to, whatever follows the word "comprising". Thus, the use of the term "comprising" indicates that the listed elements are required or mandatory, but that other elements are optional and may or may not be present. The terms "comprising" and "including" as used herein are interchangeable with each other.

By "consisting of" it is meant including, and limited to, whatever follows the phrase "consisting of". Thus, the phrase "consisting of" indicates that the listed elements are required or mandatory, and that no other elements may be present.

By "completely" it is meant totally and utterly. Thus, the use of the term "completely" as used herein indicates that light from the input optical fibre reaches at the reflecting tip and is reflected totally and utterly (almost 100 %) into one or more output optical fibres.

The terms "at least one" and "one or more" as used herein are interchangeable and relate to at least 1 and include 1, 2, 3, 4, 5, 6, 7, 8, 9 and more. Any function assigned to the "one or more" or "at least one" input- and output optical fibre may be achieved regardless of the number of the optical fibres.

The invention has been described broadly and generically herein. Each of the narrower species and sub-generic groupings falling within the generic disclosure also form part of the invention. This includes the generic description of the invention with a proviso or negative limitation removing any subject matter from the genus, regardless of whether or not the excised material is specifically recited herein.

Other embodiments are within the following claims and non-limiting examples. It is to be understood that these examples are for illustrative purposes only and are not to be construed to limit the scope of the present invention.

The invention is defined solely by the appended claims.

## Claims

1. A fibre optic acceleration sensor (1) for sensoring and monitoring end-winding vibration and measuring parameters such as acceleration, force, or displacement, comprising:
a mechanical portion (2) comprising a seismic mass (4) with a reflecting tip (5) extending therefrom; and
an optical portion (3) comprising one input optical fibre (11) and two output optical fibres (12);
wherein the input optical fibre (11) is placed in between the two output optical fibres (12),
and wherein the reflecting tip (5) is configured to reflect light completely from the input optical fibre (11) into the output optical fibres (12),
**characterized in that** the two output optical fibres (12) form two angles (α) with the input optical fibre (11) at the reflecting tip (5) from each side of the longitudinal axis of the input optical fibre (11), each one of the two angles being an acute angle (α).

2. The fibre optic acceleration sensor (1) according to claim 1, wherein the input optical fibre (11) and/or output optical fibre (12) are bendable optical fibres.

3. The fibre optic acceleration sensor (1) according to claim 1 or claim 2, wherein the acute angle (α) at the reflecting tip (5) is about 45° or 70°.

4. The fibre optic acceleration sensor (1) according to anyone of the preceding claims, wherein the distance between an end face (27) of the output optical fibre (12) and the reflecting tip (5) is less than the distance between an end face (26) of the input optical fibres (11) and the reflecting tip (5).

5. The fibre optic acceleration sensor (1) according to anyone of the preceding claims, wherein the reflecting tip (5) is provided with a reflecting coating.

6. The fibre optic acceleration sensor (1) according to anyone of the preceding claims, wherein the reflecting tip (5) is a micro-mirror.

7. The fibre optic acceleration sensor (1) according to anyone of the preceding claims, wherein the mechanical portion (2) has at least two anchor points (8).

8. The fibre optic acceleration sensor (1) according to anyone of the preceding claims, wherein the seismic mass (4) is provided with a symmetric design or an asymmetric design.

9. A microelectromechanical system comprising the fibre optic acceleration sensor (1) according to anyone of the preceding claims.

10. The microelectromechanical system according to claim 9 provided with anchors (13) and grooves (14) for the input and output optical fibres (11, 12) to be inserted therein.

11. The microelectromechanical system according to claim 9 or claim 10 provided with glue reservoirs (15).

12. The microelectromechanical system according to anyone of the claims 9 to 11, wherein stoppers (16) are provided for the input and output optical fibres (11, 12) to be inserted manually.

## Patentansprüche

1. Faseroptischer Beschleunigungssensor (1) zum Erfassen und Überwachen von Wicklungskopfvibration und Messen von Parametern wie Beschleunigung, Kraft oder Verlagerung, umfassend:
- einen mechanischen Bereich (2), welcher eine seismische Masse (4) mit einer sich daran erstreckenden reflektierenden Spitze (5) umfasst; und
- einen optischen Bereich (3), welcher einen Eingangslichtwellenleiter (11) und zwei Ausgangslichtwellenleiter (12) umfasst;
wobei der Eingangslichtwellenleiter (11) zwischen den zwei Ausgangslichtwellenleitern (12) angeordnet ist,
und wobei die reflektierende Spitze (5) ausgebildet ist, um Licht vollständig von dem Eingangslichtwellenleiter (11) in die Ausgangslichtwellenleiter (12) zu reflektieren,
**dadurch gekennzeichnet, dass** die zwei Ausgangslichtwellenleiter (12) mit dem Eingangslichtwellenleiter (11) an der reflektierenden Spitze (5) an jeder Seite der longitudinalen Achse des Eingangslichtwellenleiters (11) zwei Winkel (α) bilden, wobei jeder der zwei Winkel ein spitzer Winkel (α) ist.

2. Faseroptischer Beschleunigungssensor (1) nach Anspruch 1, wobei der Eingangslichtwellenleiter (11) und/oder die Ausgangslichtwellenleiter (12) biegbare Lichtwellenleiter sind.

3. Faseroptischer Beschleunigungssensor (1) nach Anspruch 1 oder Anspruch 2, wobei der spitze Winkel (α) an der reflektierenden Spitze (5) ist etwa 45° oder 70°.

4. Faseroptischer Beschleunigungssensor (1) nach einem der vorhergehenden Ansprüche, wobei der Abstand zwischen einer Endfläche (27) des Ausgangslichtwellenleiters (12) und der reflektierenden Spitze (5) geringer ist als der Abstand zwischen einer Endfläche (26) des Eingangslichtwellenleiters (11) und der reflektierenden Spitze (5).

5. Faseroptischer Beschleunigungssensor (1) nach einem der vorhergehenden Ansprüche, wobei die reflektierende Spitze (5) mit einer reflektierenden Beschichtung versehen ist.

6. Faseroptischer Beschleunigungssensor (1) nach einem der vorhergehenden Ansprüche, wobei die reflektierende Spitze (5) ein Mikrospiegel ist.

7. Faseroptischer Beschleunigungssensor (1) nach einem der vorhergehenden Ansprüche, wobei der mechanische Bereich (2) mindestens zwei Ankerpunkte (8) hat.

8. Faseroptischer Beschleunigungssensor (1) nach einem der vorhergehenden Ansprüche, wobei die seismische Masse (4) mit einer symmetrischen oder einer unsymmetrischen Form versehen ist.

9. Mikroelektromechanisches System, umfassend einen faseroptischen Beschleunigungssensor (1) nach einem der vorhergehenden Ansprüche.

10. Mikroelektromechanisches System nach Anspruch 9, versehen mit Ankern (13) und Nuten (14), um den Eingangslichtwellenleiter und die Ausgangslichtwellenleiter (11, 12) darin aufzunehmen.

11. Mikroelektromechanisches System nach Anspruch 9 oder Anspruch 10 versehen mit Klebstoffreservoirs (15).

12. Mikroelektromechanisches System nach einem der Ansprüche 9 bis 11, wobei für den Eingangslichtwellenleiter und die Ausgangslichtwellenleiter (11, 12) manuell einführbare Stoppelemente (16) vorgesehen sind.

## Revendications

1. Capteur d'accélération à fibre optique (1) pour mesurer et surveiller une vibration de fin d'enroulement et des paramètres de mesure tels que l'accélération, la force, ou le déplacement, comprenant :
- une partie mécanique (2) comprenant une masse sismique (4) avec une pointe réfléchissante (5) s'étendant depuis celle-ci; et
- une partie optique (3) comprenant une fibre optique d'entrée (11) et deux fibres optiques de sortie (12);
la fibre optique d'entrée (11) étant placée entre les deux fibres optiques de sortie (12),
et la pointe réfléchissante (5) étant configurée pour réfléchir complètement la lumière depuis la fibre optique d'entrée (11) dans les fibres optiques de sortie (12),
**caractérisé en ce que** les deux fibres optiques de sortie (12) forment deux angles (α) avec la fibre optique d'entrée (11) au niveau de la pointe réfléchissante (5) de chaque côté de l'axe longitudinal de la fibre optique d'entrée (11), chacun des deux angles étant un angle aigu (α).

2. Capteur d'accélération à fibre optique (1) selon la revendication 1, dans lequel la fibre optique d'entrée (11) et/ou la fibre optique de sortie (12) sont des fibres optiques pliables.

3. Capteur d'accélération à fibre optique (1) selon la revendication 1 ou 2, dans lequel l'angle aigu (α) à la pointe réfléchissante est d'environ 45° ou 70°.

4. Capteur d'accélération à fibre optique (1) selon l'une des revendications précédentes, dans lequel la distance entre une extrémité (27) de la fibre optique de sortie (12) et la pointe réfléchissante (5) est inférieure à celle entre une extrémité (26) des fibres optique d'entrée (11) et la pointe réfléchissante (5).

5. Capteur d'accélération à fibre optique (1) selon l'une des revendications précédentes, dans lequel la pointe réfléchissante (5) est pourvue d'un revêtement réfléchissant.

6. Capteur d'accélération à fibre optique (1) selon l'une des revendications précédentes, dans lequel la pointe réfléchissante (5) est un micro-miroir.

7. Capteur d'accélération à fibre optique (1) selon l'une des revendications précédentes, dans lequel la partie mécanique (2) possède au moins deux points d'ancrage (8).

8. Capteur d'accélération à fibre optique (1) selon l'une des revendications précédentes, dans lequel la masse sismique (4) est conçue selon un design symétrique ou un design asymétrique.

9. Système microélectromécanique comprenant le capteur d'accélération à fibre optique (1) selon l'une des revendications précédentes.

10. Système microélectromécanique selon la revendication 9 équipé d'ancres (13) et de rainures (14) pour les fibres optiques d'entrée et de sortie (11, 12) à y insérer.

11. Système microélectromécanique selon la revendication 9 ou 10, équipé de réservoirs de colle (15).

12. Système microélectromécanique selon l'une des revendications 9 à 11, dans lequel des bouchons (16) à insérer manuellement sont fournis pour les fibres optiques d'entrée et de sortie (11, 12).
